# EUROPÄISCHE PATENTSCHRIFT

(11) **EP 0 779 778 B1**
(45) Veröffentlichungstag und Bekanntmachung des Hinweises auf die Patenterteilung: **01.07.1998**
(21) Anmeldenummer: 95929736.7
(22) Anmeldetag: 01.09.1995
(51) Int. Cl.: A01C 15/00, A01M 7/00, A01C 23/00

(54) **LANDWIRTSCHAFTLICHE MASCHINE**
FARMING MACHINE
MACHINE AGRICOLE

(30) Priorität: 06.09.1994 DE 4431666; 24.08.1995 DE 19531172
(43) Veröffentlichungstag der Anmeldung: 25.06.1997
(73) Patentinhaber: Horsch Maschinen GmbH, 92421 Schwandorf (DE)
(72) Erfinder: HORSCH, Michael, D-92421 Schwandorf (DE)
(74) Vertreter: Wasmeier, Alfons, Dipl.-Ing.
(86) Internationale Anmeldenummer: DE9501183
(87) Internationale Veröffentlichungsnummer: WO9607308

(56) Entgegenhaltungen:
- DE-A- 1 582 006
- DE-A- 3 205 200
- FR-A- 1 543 727
- FR-A- 2 595 189
- GB-A- 2 151 892

## Beschreibung

Die Erfindung betrifft eine landwirtschaftliche Maschine nach dem Oberbegriff des Anspruches 1.

Moderne landwirtschaftliche Großmaschinen zum Bearbeiten großer Flächen werden in der Regel mit zunehmender Arbeitsleistung nicht nur breiter, sondern auch länger. Lange Fahrzeuge führen beim Kurvenfahren zu erheblichen Problemen, da mit zunehmender Baulänge der minimale zu fahrende Radius zunimmt.

Aus FR-A- 25 95 189 ist ein schleppergezogener Einachs-Anhänger bekannt, der über eine Deichsel mit dem Schlepperfahrzeug verbunden ist. Der Anhänger besteht aus einem oben offenen fünfeckigen Materialaufnahmebehälter, der zur gleichmäßigen Gewichtsverteilung in Richtung der Längsachse mittig von der Räderachse bzw. den Rädern aufgenommen wird, d.h. daß etwa die eine Hälfte des Behälters hinter der Achse des Anhängers und die andere Hälfte des Behälters vor der Achse des Anhängers angeordnet ist. Die Deichsel ist am Vorderende des Behälterbodens mit dem Behälter verbunden und trägt zwischen Behälter und Schlepper ein Bodenbearbeitungswerkzeug.

Aufgabe der Erfindung ist es, bei Maschinen mit sehr großer Arbeitsbreite in möglichst engen Radien fahren zu können, um auf kleinem Raum zu wenden und die Bauweise so gedrungen wie möglich auszuführen, d.h. die Baulänge zu verkürzen.

Hierzu wird gemäß der Erfindung eine Maschine mit den Merkmalen des Kennzeichens des Anspruches 1 vorgeschlagen. Weitere Ausgestaltungen der Erfindung sind Gegenstand der Unteransprüche.

Der im vorderen Bereich der Maschine vorzusehende Behälter, z.B. ein Säbehälter, ein Spritzmittelbehälter oder dgl. hat dreieckförmigen Grundriß und ist mit der Spitze in Fahrtrichtung auf der Mittellängsachse der Maschine angeordnet. Die Dreieck-Grundrißform ist ein gleichschenkeliges Dreieck und insbesondere ein gleichseitiges Dreieck. Mit einem derartigen Dreieck-Grundriß kann die Baulänge der Gesamtmaschine verkürzt werden. Eine kurze Baulänge ist für eine enge Kurvenfahrt und damit für ein wendiges Fahrzeug von ausschlaggebender Bedeutung. Beim Kurvenfahren und Einschlagen der Räder ist ein schmaler Behälter an der Drehstelle von besonderem Vorteil, weil er das Fahren eines kleineren Radius ermöglicht, im Gegensatz zu den üblichen Behältern mit Rechteck-Grundriß, bei denen der kleinste zu fahrende Radius wesentlich größer ist, da beim Einschlagen die Räder sehr bald mit der Behälter-Seitenwand in Eingriff kommen.

Um die Maschine vielseitig einsetzbar verwenden zu können, ist es zweckmäßig, den Behälter abnehmbar bzw. auswechselbar auf einem fahrbaren, vorzugsweise einachsigen Rahmengestell aufzusatteln. Der Behälter ist z.B. ein Sägutbehälter, das fahrbare Rahmengestell ein Säwagen, die daran anschließende Vorrichtung eine Sämaschine und das der Vorrichtung nachgeschaltete Gerät z.B. ein Striegel oder ein Grubber. Der Behälter kann jedoch für einen anderen Einsatzzweck auch z.B. ein Flüssigkeitsbehälter oder ein Vorratsbehälter anderer Art, z.B. ein Streugutbehälter sein.

Mit dem Rahmengestell ist eine Deichsel integriert, auf der der Behälter aufsitzt, die an das Schlepperfahrzeug angekoppelt ist und von der zusammen mit dem Rahmengestell die Bearbeitungsvorrichtung, z.B. eine Sämaschine mit anschließendem Striegel aufgenommen wird. Insbesondere ist die Vorrichtung auf Rahmengestell und Deichsel abgestützt, die zu einem Deichselwagen miteinander kombiniert sein können, der den Behälter aufnimmt und auf dem die Bodenbearbeitungsvorrichtung, also z.B. die Sämaschine mit Striegel aufgehängt ist.

Die Bodenbearbeitungsvorrichtung ist an Tragarmen gelenkig mit dem Rahmengestell befestigt und wird mittels Arbeitszylinder angehoben und abgestützt. Dieser Hubzylinder sitzt auf der Bearbeitungsvorrichtung auf und stützt sich auf dem Rahmengestell und/oder der Deichsel ab, derart, daß bei gleichem Hub eine verkürzte bzw. sehr gedrungene Bauweise erzielt wird.

Die Bearbeitungsvorrichtung ist auf dem Rahmengestell so abgestützt, daß der Anhängepunkt der Bearbeitungsvorrichtung am Rahmengestell sehr nahe der Achsmitte des fahrbaren Rahmengestells angeordnet ist. Dies ergibt bei Höhenverschiebungen aufgrund von Bodenunebenheiten, z.B. beim Durchfahren von Löchern, eine geringe Übersetzung und damit eine exaktere Tiefenführung, so daß Bodenunebenheiten keinen großen Einfluß haben.

Nachstehend wird die Erfindung in Verbindung mit der Zeichnung anhand eines Ausführungsbeispieles erläutert. Es zeigt:
- Fig. 1: eine Aufsicht auf die Gesamtmaschine,

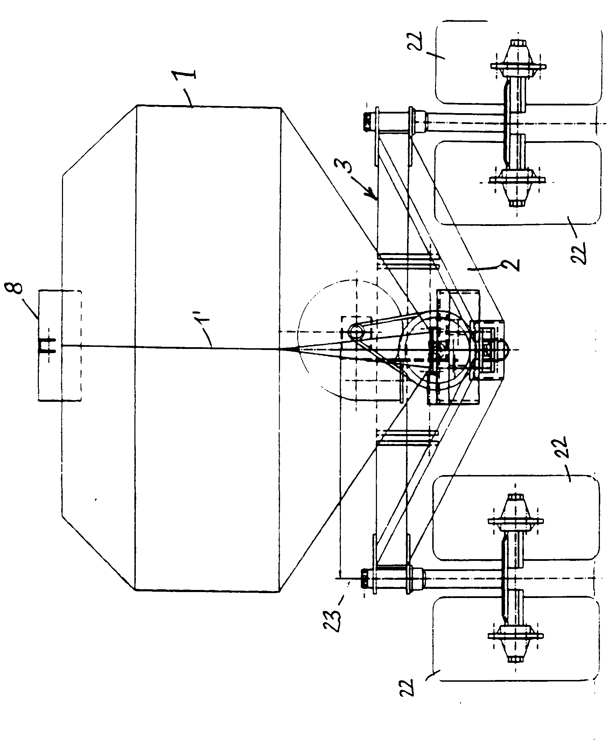

- Fig. 2: eine Ansicht des Behälters mit Fahrgestell und Deichsel von vorne,

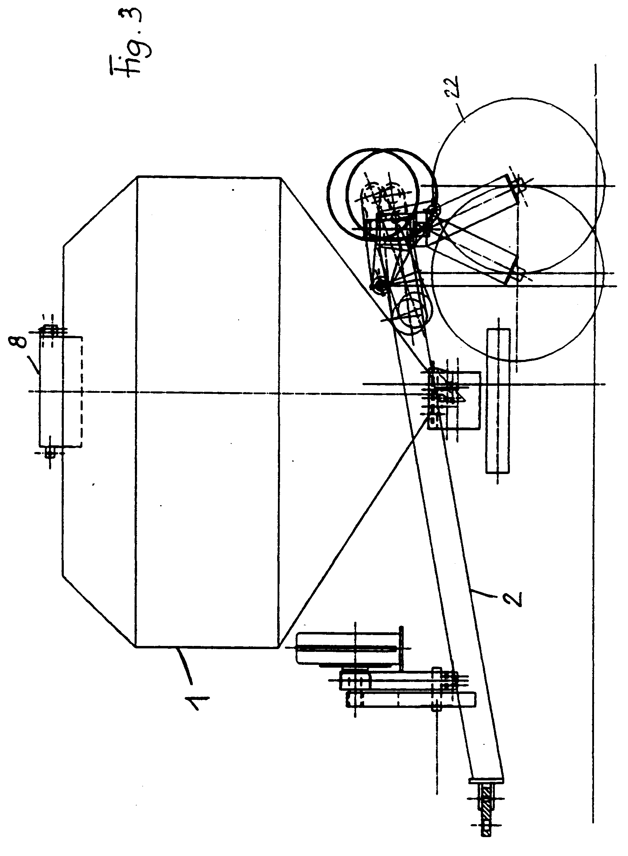

- Fig. 3: eine Ansicht des Behälters mit Rahmengestell und Deichsel von der Seite,

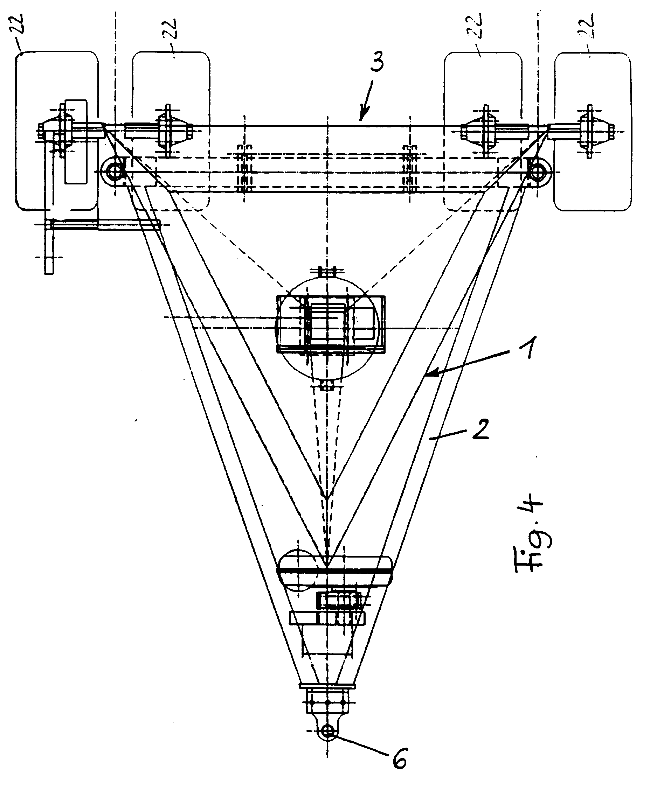

- Fig. 4: eine Ansicht des Behälters mit Rahmengestell und Deichsel von oben (vergrößerter Ausschnitt aus Fig. 1), und
- Fig. 5: Behälter, Rahmengestell, Deichsel und Geräteaufnahme von der Seite.

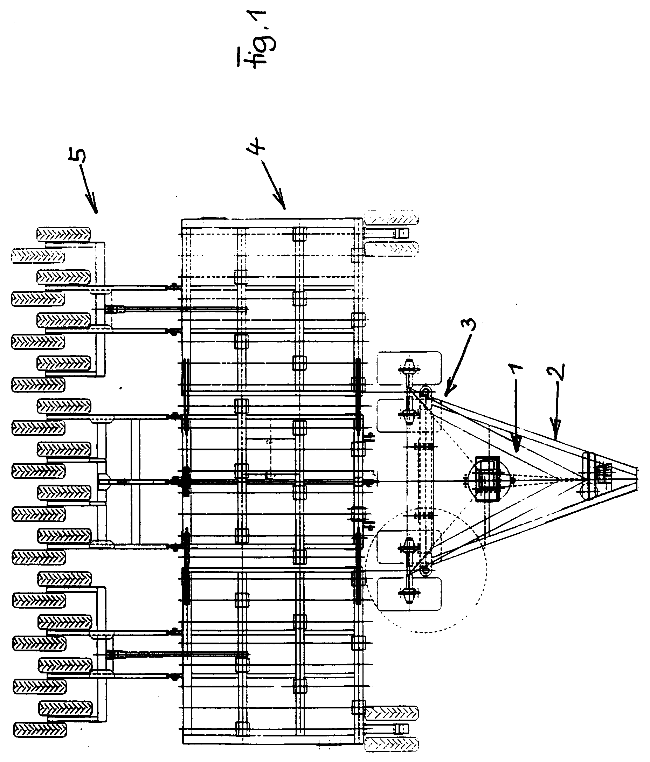

In Fig. 1 ist eine schleppergezogene Sämaschine mit Sätank und Striegel für große Arbeitsbreite dargestellt. Mit 1 ist der Behälter bezeichnet, mit 2 die Deichsel, mit 3 das Rahmengestell mit Rädern, das den Behälter bzw. Sätank aufnimmt, mit 4 die eigentliche Sämaschine und mit 5 ein nachgeschalteter Striegel mit einer Vielzahl von Stützrädern.

Der Behälter 1 nach der Erfindung hat Dreieck-Form, wobei die Spitze des Dreiecks zum (nicht dargestellten) Zugfahrzeug gerichtet ist. Der Behälter 1 ist auf das fahrbare Rahmengestell 3 aufgesattelt und mit seinem Schwerpunkt möglichst tiefliegend angeordnet. Der in Fahrtrichtung spitz zulaufende Behälter 1 ist etwa im unteren Drittel von außen nach innen verjüngt ausgebildet, die Neigung des Behälterbodens 6 zum Auslauf 7 an der tiefsten Stelle ist dadurch bestimmt, daß das Gut im Behälter einwandfei zum Ablauf abrieseln bzw. abfließen kann. Am oberen Ende des Behälters 1 ist eine verschließbare Einfüllöffnung 8 vorgesehen. Der Schwerpunkt des Behälters liegt im Abstand zur Achse des Rahmengestells 3; dieser Abstand ist wesentlich kleiner als der Abstand vom Behälterschwerpunkt zum Ankoppeln am vorderen Ende 9 der Deichsel 2. Die V-Form der Deichsel ermöglicht, daß der untere Teil des Behälters 1 zwischen die Deichselschenkel eingesetzt werden kann, um den Schwerpunkt im aufgesattelten Zustand möglichst niedrig zu legen. Die Baulänge des Rahmengestells mit Deichsel ist dabei extrem kurz auslegbar.

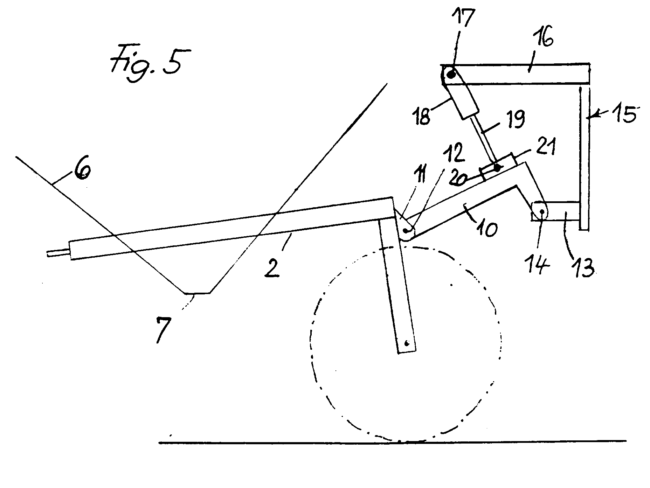

Die Sämaschine 4 mit dem nachlaufenden Striegel 5 ist, wie in Fig. 5 schematisch angedeutet, am Rahmengestell 3 und an der Deichsel 2 heb- und senkbar befestigt. Tragarme 10 sind hierzu an einem Flansch 11 am Rahmengestell bzw. der Deichsel gelenkig bei 12 am einen Ende gelagert, während am entgegengesetzten Ende des Tragarmes 10 Träger 13 bei 14 angelenkt sind, die Teil des Sämaschinenrahmens 15 sind, wobei der obere Träger 16 gelenkig bei 17 einen Arbeitszylinder 18 aufnimmt, dessen Kolbenstange 19 gelenkig bei 20 an einem Flansch 21 der Hubdeichsel 10, 13 festgelegt ist. Die Hubvorrichtung 18 ist somit auf der Bodenbearbeitungsvorrichtung befestigt und stützt sich auf der Hubdeichsel, die wiederum gelenkig am Rahmengestell befestigt ist, ab. Die Anlenkstelle 12 ist dabei nahe der Achsmitte des Rahmengestells angeordnet.

Das Rahmengestell 3 stützt sich auf nachgeführte Schwenkräder 22 ab, die bei der dargestellten Ausführungsform jeweils paarweise zur Bildung zweier Schwenkräderpaare vorgesehen sind, wobei jedes Schwenkräderpaar eine selbstlenkende Schwenkräderanordnung bildet, die sich um eine Schwenkachse 23 um 360° nach jeder Richtung drehen kann.

Die Erfindung wurde voranstehend an einem Ausführungsbeispiel beschrieben. Es versteht sich, daß Änderungen und Abwandlungen möglich sind. So ist es beispielsweise möglich, die Schwenkräder 22 als Starrachse auszubilden, so daß die Sämaschine einem Einachsen-Anhänger entspricht. Weiterhin kann auch eine Arretiereinrichtung vorgesehen sein, die die Schwenkräder in Arbeitsstellung in Fahrtrichtung selbsttätig arretiert. Schließlich ist es auch möglich, den Behälter 1 durch wenigstens eine Trennwand 1' in zwei Räume zu unterteilen, und zwar zum gleichzeitigen Ausbringen mehrerer Komponenten.

## Patentansprüche

1. Landwirtschaftliche Maschine zur Bodenbearbeitung bzw. Bodenbehandlung, die mit einer Deichsel an ein Schlepperfahrzeug angekoppelt ist und die einen von einem fahrbaren, einachsigen Rahmengestell aufgenommenen Vorratsbehälter aufweist, **dadurch gekennzeichnet,** daß
a) der Vorratsbehälter (1) eine im Grundriß dreieckförmige Gestalt hat und die Spitze des gleichschenkeligen Dreiecks dem Schlepperfahrzeug zugewandt ist,
b) die Deichsel (2) in das Rahmengestell (3) integriert ist und im Grundriß dreieckförmige Gestalt hat,
c) die Spitze des Vorratsbehälters (1) nahe dem Anhängepunkt der Deichsel (2) am Schlepperfahrzeug angeordnet und die Basis des dreieckförmigen Vorratsbehälters (1) im wesentlichen mit der Rahmenachse zusammenfällt,
d) der Spitzenwinkel des Vorratsbehälters (1) größer ist als der der Deichsel (2),
e) der Vorratsbehälter (1) auf das Rahmengestell (3) abnehmbar aufgesattelt ist,
f) der Schwerpunkt des Vorratsbehälters (1) beabstandet von der Radachse des Rahmengestells (3) in Richtung der Deichsel (2) an der Koppelstelle des Rahmengestells angeordnet ist, und
g) der Abstand zwischen Koppelstelle der Deichsel (2) am Schlepperfahrzeug und Spitze der V-Form des Vorratsbehälters (1) klein ist im Verhältnis zur Deichsellänge.

2. Maschine nach Anspruch 1, dadurch gekennzeichnet, daß die Deichsel (2) Teil des Rahmengestells (3) ist und der Behälter (1) auf der Deichsel (2) aufsitzt und von der Deichsel lösbar ausgebildet ist.

3. Maschine nach Anspruch 1 oder 2, dadurch gekennzeichnet, daß das Rahmengestell (3) Anhängevorrichtungen (10, 12) aufweist, an denen die Bodenbearbeitungs-bzw. Bodenbehandlungsvorrichtung (4) über Arbeitszylinder (18) heb- und senkbar angeordnet ist.

4. Maschine nach Anspruch 3, dadurch gekennzeichnet, daß die Tragarme (10) gelenkig mit dem Rahmengestell (3) verbunden sind und die Bodenbearbeitungs-bzw. Bodenbehandlungsvorrichtung (4) gelenkig aufnehmen, daß die Arbeitszylinder (18) zum Heben und Senken der Vorrichtung zwischen Rahmengestell und Vorrichtung angeordnet sind, und daß die Vorrichtung auf dem Rahmengestell (3) abgestützt ist.

5. Maschine nach Anspruch 3 oder 4, dadurch gekennzeichnet, daß die Anhängevorrichtung (12) des die Hubdeichsel (10, 13) aufnehmenden Rahmengestells nahe bzw. direkt vertikal über der Achsmitte dieses Rahmengestells angeordnet ist.

6. Maschine nach einem der Ansprüche 4 - 5, dadurch gekennzeichnet, daß der Arbeitszylinder (18) auf der Bodenbearbeitungs- bzw. Bodenbehandlungsvorrichtung (4) befestigt und auf der Hubdeichsel (10, 13) abgestützt ist.

7. Maschine nach einem der Ansprüche 1 - 6, dadurch gekennzeichnet, daß sich das Rahmengestell auf wenigstens zwei Rädern (22) oder Räderpaaren abstützt.

8. Maschine nach Anspruch 7, dadurch gekennzeichnet, daß
die Räder als nachlaufende und/oder selbstlenkende Schwenkräder (22) an einer Schwenkachse (23) ausgebildet sind, und/oder
daß eine Arretiereinrichtung zur automatischen bzw. selbsttätigen Arretierung der Schwenkräder (22) in Fahrtrichtung vorgesehen ist, und/oder
daß die Räder (22) als Starrachse ausgebildet sind.

9. Maschine nach einem der Ansprüche 1 - 8, dadurch gekennzeichnet, daß der Behälter (1) bzw. dessen Innenraum durch wenigstens eine Trennwand (1') zum Ausbringen von mehreren Komponenten in wenigstens zwei Teilräume unterteilt ist.

## Claims

1. Agricultural machine for the preparation and treatment of the soil, which is coupled by a drawbar to a tractor and which has a hopper received by a travelling, two-wheel frame, characterized in that
a) the hopper (1) has a triangular shape in plan view and the apex of the isosceles triangle faces the tractor,
b) the drawbar (2) is integrated into the frame (3) and has a triangular shape in plan view,
c) the apex of the hopper (1) is close to the attachment point of the draw-bar (2) to the tractor and the base of the triangular hopper (1) substantially coincides with the frame axis,
d) the apex angle of the hopper (1) is larger than that of the drawbar (2),
e) the hopper (1) is removably mounted on the frame (3),
f) the centre of gravity of the hopper (1) is spaced from the wheel axle of the frame (3) in the direction of the drawbar (2) and located at the frame coupling point and
g) the distance between the coupling point of the drawbar (2) to the tractor and the apex of the V-shape of the hopper (1) is small compared with the drawbar length.

2. Machine according to claim 1, characterized in that the drawbar (2) is part of the frame (3) and the hopper (1) is mounted on the drawbar (2) and is constructed so as to be detachable from said drawbar.

3. Machine according to claim 1 or 2, characterized in that the frame (3) has attachment devices (10, 12), on which the soil preparation and treatment device (4) is placed in raisable and lowerable manner by means of working cylinders (18).

4. Machine according to claim 3, characterized in that the supporting arms (10) are connected in articulated manner to the frame (3) and receive in articulated manner the soil preparation and treatment device (4), that the working cylinders (18) for raising and lowering the device are positioned between the latter and the frame and that the device is supported on the frame (3).

5. Machine according to claim 3 or 4, characterized in that the attachment device (12) of the frame receiving the lifting drawbars (10, 13) is positioned close to or directly vertically above the frame axle centre.

6. Machine according to one of the claims 4 and 5, characterized in that the working cylinder (18) is fixed to the soil preparation and treatment device (4) and supported on the lifting drawbars (10, 13).

7. Machine according to one of the claims 1 to 6, characterized in that the frame is supported on at least two wheels (22) or wheel pairs.

8. Machine according to claim 7, characterized in that the wheels are constructed as trailing and/or self-steering swivel wheels (22) on a pivot pin (23) and/or that a stopping device is provided for the automatic or self-acting stopping of the swivel wheels (22) in the direction of travel and/or that the wheels (22) are constructed as a rigid axle.

9. Machine according to one of the claims 1 to 8, characterized in that the container (1) or its inner area is subdivided into at least two partial areas by at least one partition (1') for the application of several components.

## Revendications

1. Machine agricole pour le travail du sol et/ou le traitement du sol, accouplée par une barre d'attelage à un tracteur et présentant un réservoir monté sur un châssis mobile à un seul essieu, caractérisée en ce que
a) le réservoir (1) présente en plan une forme triangulaire et le sommet du triangle isocèle est situé côté tracteur,
b) la barre d'attelage (2) est intégrée dans le châssis (3) et présente en plan une forme triangulaire,
c) la pointe du réservoir (1) est disposée à proximité du point d'attelage de la barre d'attelage (2) sur le tracteur et la base du réservoir (1) triangulaire coïncide substantiellement avec l'axe du châssis,
d) l'angle à la pointe du réservoir (1) est plus grand que l'angle à la pointe de la barre d'attelage (2),
e) le réservoir (1) est démontable du châssis (3),
f) le centre de gravité du réservoir (1) est situé à une certaine distance de l'essieu du châssis (3) dans la direction de la barre d'attelage (2) vers l'endroit d'accouplement du châssis, et
g) la distance séparant l'endroit d'accouplement de la barre d'attelage (2) sur le tracteur de la pointe de la forme en V du réservoir (1) est petite en comparaison avec la longueur de la barre d'attelage.

2. Machine suivant la revendication 1, caractérisée en ce que la barre d'attelage (2) fait partie du châssis (3) et le réservoir (1) repose sur la barre d'attelage (2) et est conçu de manière à pouvoir être démonté de la barre d'attelage.

3. Machine suivant la revendication 1 ou 2, caractérisée en ce que le châssis (3) présente des dispositifs de montage (10, 12) sur lesquels est disposé le dispositif de travail du sol et/ou de traitement du sol (4) relevable et abaissable à l'aide de vérins (18).

4. Machine suivant la revendication 3, caractérisée en ce que les bras de suspension (10) sont articulés au châssis (3) et reçoivent par articulation le dispositif de travail du sol et/ou de traitement du sol, en ce que les vérins (18) destinés à relever et à abaisser le dispositif sont disposés entre le châssis et le dispositif et en ce que le dispositif prend appui sur le châssis (3).

5. Machine suivant la revendication 3 ou 4, caractérisée en ce que le dispositif de montage (12) du châssis recevant la barre de relevage (10, 13) est disposé à la verticale tout près de ou directement au-dessus et au milieu de l'essieu du châssis.

6. Machine suivant la revendication 4 ou 5, caractérisée en ce que le vérin (18) est fixé sur le dispositif de travail du sol et/ou de traitement du sol et prend appui sur la barre de relevage (10, 13).

7. Machine suivant l'une quelconque des revendications 1 à 6, caractérisée en ce que le châssis prend appui sur au moins deux roues (22) ou paires de roues.

8. Machine suivant la revendication 7, caractérisée en ce que les roues sont conçues comme des roues de pivotement traînées et/ou autoguidées (22) sur un axe de pivotement (23), et/ou en ce qu'un dispositif d'arrêt destiné à arrêter automatiquement les roues de pivotement (22) est prévu dans le sens de marche, et/ou en ce que les roues (22) sont montées sur essieu rigide.

9. Machine suivant l'une quelconque des revendications 1 à 8, caractérisée en ce que le réservoir (1), respectivement l'intérieur de celui-ci, est divisé en au moins deux parties par au moins une paroi de séparation (1') pour la réception de plusieurs composants.
